# EUROPEAN PATENT SPECIFICATION

(11) **EP 2 870 537 B1**
(45) Date of publication and mention of the grant of the patent: **05.05.2021**
(21) Application number: 12880726.0
(22) Date of filing: 09.07.2012
(51) Int. Cl.: G06F 11/30, G06F 11/32, A01D 101/00, B25F 5/00

(54) **AN INTERFACE FOR A POWER TOOL**
SCHNITTSTELLE FÜR EIN ELEKTROWERKZEUG
INTERFACE POUR UN OUTIL MOTORISÉ

(43) Date of publication of application: 13.05.2015
(73) Proprietor: Techtronic Outdoor Products Technology Limited, Hamilton HM12 (BM)
(72) Inventor: RlCKEY, Todd Brandon, Hong Kong (CN); ZHOU, Haijun, Dongguan Guangdong 523945 (CN)
(74) Representative: Grünecker Patent- und Rechtsanwälte PartG mbB
(86) International application number: PCT/CN2012/078392
(87) International publication number: WO 2014/008627

(56) References cited:
- EP-A1- 2 072 192
- WO-A1-2004/028749
- CN-A- 102 239 767
- DE-A1-102010 029 729
- JP-A- H09 238 547
- US-A1- 2005 011 655
- US-A1- 2006 116 787
- US-A1- 2006 142 894
- US-A1- 2007 035 917
- US-A1- 2008 150 474
- US-A1- 2009 138 116
- US-B1- 6 913 087

## Description

### TECHNICAL FIELD

The present invention relations to a power tool comprising an interface.

### BACKGROUND

Power tools such as drills, saws and mowers may include complex mechanical components to assist a user in performing a particularly task. However, although these mechanical components have improved with time, the interface to provide feedback to a user has not improved significantly.

As an example, some advance power tools may include an interface comprising indicator LEDs or a small LCD panel which provides status information to a user. In these examples, LEDs or LCD panels are designed and implemented on the tool so as to convey specific information concerning the power tool to a user. This type of information may include whether the tool is energised or the setting it is in. Whilst these panels and lights are useful, they are often expensive to manufacture and are limited in the information they can provide to a user. It is also difficult to change or tailor the type of information conveyed to a user once the LCD panel has been pre-programmed during manufacturing and thus the information presented by the interface may not be suitable for every user since each user may desire specific types of information concerning their power tool based on their individual needs or requirements.

US 6,913,087 relates to a system and method for communicating over power terminals in DC tools. According to the abstract of this document, there is provided a system and method for unidirectionally or bi-directionally communicating information and data to and from an electronic module housed within a cordless power tool, over power terminals of the cordless power tool, while a battery pack of the tool is removed from the tool. A data transfer device is connected to at least one power terminal of the tool in place of the battery pack. The power terminal is also used for electrically connecting the battery pack to the tool during normal operation of the tool. A voltage supplied by the data transfer device to the tool is sequentially varied between a first level and a second level, in accordance with a predetermined communications protocol, to transmit data from electronic module of the tool to the data transfer device. A voltage signal applied to the electronic module of the tool is sequentially shifted between a first voltage and a second voltage to transmit data from the data transfer device to the tool. Thus, data can be transmitted between the tool and the data transfer device without requiring disassembly of the tool.

EP 2,072,192 relates to a control module. According to an abstract ofthis document, there is provied a module which has an interface to connect the module with electronic systems of power tools / electric device so that data are exchanged between a microcontroller and the system. The interface is formed as a wireless interface e.g. Bluetoothinterface, where the module is designed so that basic functions of the tool/device are extended. An input unit and an output unit are provided, where the module and/or the tool/device are designed so that the module is detachably fixed to the tool/device by the interface and through holes. An independent claim is also included for a power tool and/or an electrical device having a control module.

US 2007/035917 A1 discloses a docking system including a portable electronic device capable of operating in multiple orientations, including vertical and horizontal orientations, and a station configured to mechanically accept and operatively interface with the portable electronic device in multiple orientations, the docking station including a rack, a rotational platform, a power transfer mechanism and data transfer mechanism.

### SUMMARY OF THE INVENTION

In accordance with a first aspect of the invention, there is provided a power tool according to claim 1.

In the first aspect, the power transmitter is arranged to transmit power from a power source of the power tool to the portable electronic device.

In the first aspect, the power transmitted from the power source is arranged to energize the portable electronic device.

In an embodiment of the first aspect, the power transmitted from the power source is arranged to recharge a battery of the portable electronic device.

In an embodiment of the first aspect, the data communication module includes a data port arranged to define the data connection.

In an embodiment of the first aspect, the data port includes one or more physical electrically conductive conduits arranged to define the data connection.

In an embodiment of the first aspect, the data port includes one or more wireless transmitters arranged to define the data connection.

In an embodiment of the first aspect, the data communicated between the power tool and the portable computing device includes power tool data associated with the power tool.

In an embodiment of the first aspect, the power tool data includes an operation status of the power tool.

In an embodiment of the first aspect, the power tool data further includes information associated with a power source of the power tool.

In an embodiment of the first aspect, the information associated with a power source of the power tool includes information describing the power capacity of the power source.

In an embodiment of the first aspect, the power tool data associated with the power tool are generated from one or more sensors.

In an embodiment of the first aspect, the one or more sensors are disposed on one or more components of the power tool.

In an embodiment of the first aspect, the portable computing device is arranged to process the data communicated between the power tool and the portable computing device.

In an embodiment of the first aspect, the portable computing device is arranged to present the data communicated between the power tool and the portable computing device in graphical format.

In an embodiment of the first aspect, the portable computing device is arranged to control the power tool with data connection.

In an embodiment of the first aspect, the computing device is arranged to control the power tool by transmitting commands through the data connection to the power tool.

In an embodiment of the first aspect, the power tool includes a control unit arranged to communicate with the portable computing device.

In the first aspect, the interface further comprises a support arrangement arranged to support the portable electronic device.

In the first aspect, the support arrangement includes a back rest arranged to support the portable electronic device.

In an embodiment of the first aspect, the back rest is planar.

In an embodiment of the first aspect, the back rest has an adjustable support area.

In the first aspect, the back rest has an adjustable decline relative to a base of the back rest.

In an embodiment of the first aspect, the support arrangement further includes a retaining bucket arranged to retain the portable electronic device.

In an embodiment of the first aspect, the power tool is a lawn mower.

In an embodiment of the first aspect, the lawn mower is electric.

In an embodiment of the first aspect, the lawn mower is cordless.

In the first aspect, the portable computing device is a tablet computer or a smart phone.

In an embodiment of the first aspect, the smart phone has a touch screen interface.

### BRIEF DESCRIPTION OF THE DRAWINGS

Embodiments of the present invention will now be described, by way of example, with reference to the accompanying drawings in which:
Figure 1A is a block diagram of an interface for connecting a power tool and a computing device ;
Figure 1B is a block diagram of the interface of Figure 1 illustrating the connections of the interface to different parts of a power tool and different components of the computing device;
Figures 2A and 2B are perspective view of one embodiment of the interface of Figure 1A and 1B;
Figures 3A to 3E are front, side, top, rear and perspective views of a lawn mower having the interface of Figures 2A and 2B;
Figure 4 is an example screen shot of a computing device executing an software application whilst being connected to the interface of Figures 3A to 3E; and
Figure 5 is example screenshot of a computer device executing another software application whilst being connected to the interface of Figures 3A to 3E.

### DETAILED DESCRIPTION OF THE PREFERRED EMBODIMENT

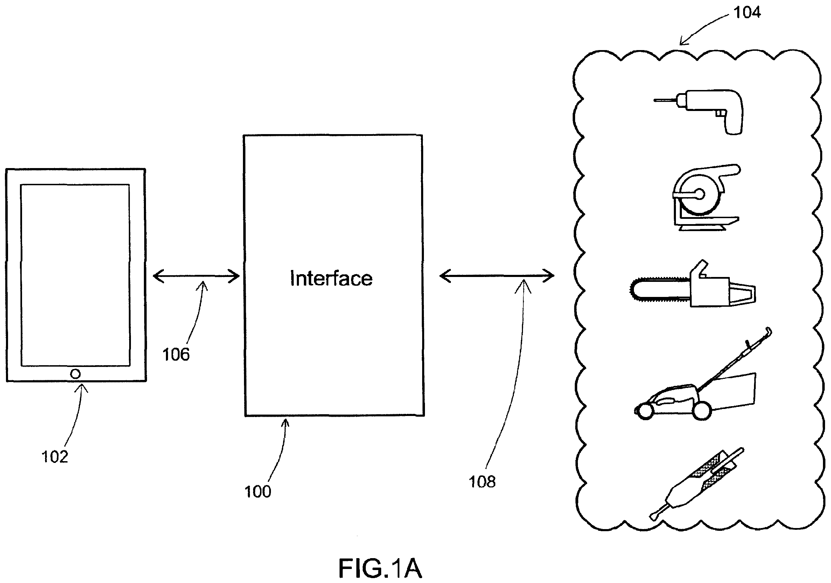

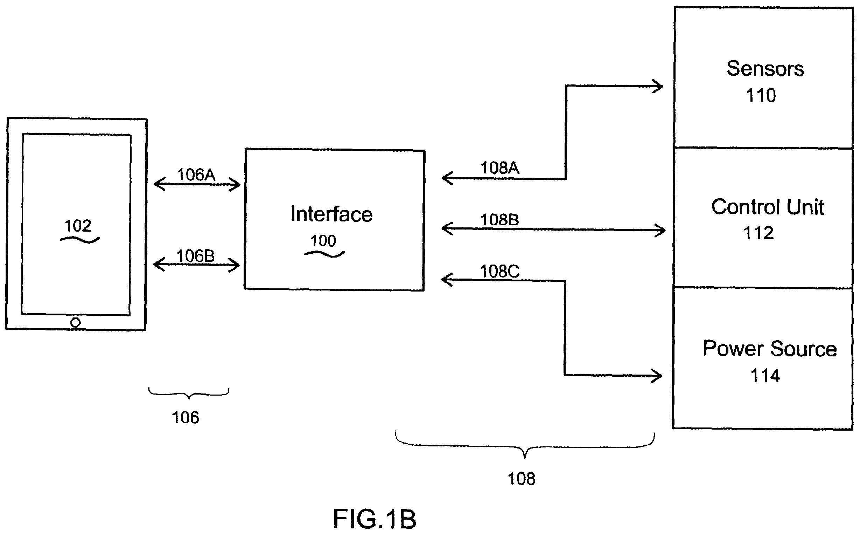

Referring to Figure 1, there is provided a block diagram illustrating an embodiment of an interface for a power tool comprising a data communication module arranged to communicate data associated with the power tool between a portable electronic device and the power tool, and a power transmitter arranged to transmit power between the power tools and the portable electronic device.

In this embodiment, the interface 100 is arranged to form a connection between a computing device 102 and power tool 104. Once the connection is formed, the interface 100 is able to facilitate data communications and/or electrical power transmission between the computing device 102 and the power tool 104 so that communication signals, such as electronic signals, can be communicated between the computing device 102 and the power tool 104 through the interface 100. Alternatively, the interface 100 may also be able to facilitate electrical power 104 to be transmitted between the power tool 104 and the computing device so that the computing device 102 may be energised by the power tool 104.

As shown in this embodiment, the computing device 102 may include a general computing device such as a computer or electronic device having memory, a processor, a storage device, a bus and an input/output. The computing device 102 any type of processing system, including computers, programmable arrays, terminals, personal computers, servers, mainframes or any other computing device. The computing device 102 is a portable computing device such as a smart phone, tablet computer or a portable personal computer which is arranged to process data by the execution of logical instructions implemented in software, hardware or a combination of both. The computing device 102 may also have one or more ports, either in the form of a wireless port or physical wired connection port arranged to facilitate communications between the computing device 102 with one or more external peripheral devices, electronic infrastructure, electronic circuit arranged to communicate with the computing device through its Input/Output port or interface. Preferably, the computing device 102 is able to communicate with external peripheral devices or other accessories through the port by allowing the peripheral devices or other accessories to connect to the data bus of the computing device 102. One example of these ports includes the serial port or Universal Serial Bus (USB) port of a computing device which permits a communication connection to the data bus of the computing device 102.

As shown in Figure 1A, the interface 100 is arranged to form a first connection 106 with the computing device 102. This first connection 106 may be in the form of a connected physical connection whereby there is physical contact between the interface 100 and the computing device 102. Alternatively, the connection 106 maybe wireless in that the interface 100 includes a wireless connection module which is arranged to facilitate a wireless connection with the computing device 102 without any physical contact. In some examples, this first connection 106 may be a data communication connection with the data bus of the computing device 102 and may include an energy transmission connection with a battery or power supply of the computing device 102.

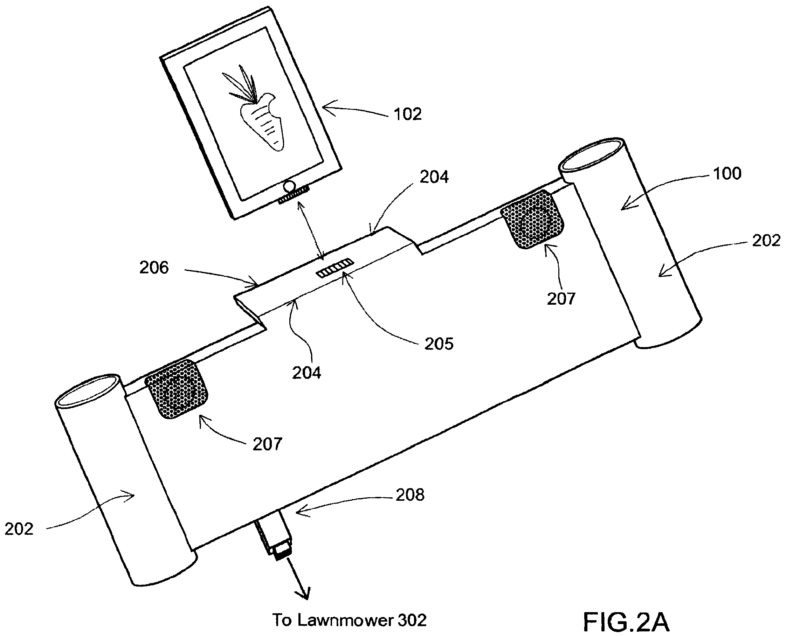

The interface 100 is also arranged to form a second connection 108 with one or more power tools 104. These power tools 104, may include a drill, saw, mower, edger, hedger, jack hammer, lathe, planar, grinder, sander, cutter, crusher, wrench, heat gun, dryer, nail gun, trimmer, shaver or any other tool which is driven by manual power, electricity, compress air or fossil fuels. In the examples shown in Figures 2A to 3E, the interface 100 is arranged to connect with a power tool 104 which is a cordless electric lawn mower 302. However, as the person skilled in the art will appreciate, the interface 100 may also be arranged to connect with any other type of power tool 104. In some examples, this second connection 108 may be a data communication connection with different parts of the power tool 104 and may include an energy transmission connection with the power source of the power tool 104.

With reference to Figure 1B, there is illustrated a block diagram of the interface 100 and the various connections 106, 108 with the computing device 102 and the power tool 104. In this embodiment, the connection 108 between the interface 100 and the power tool 104 may include three links (108A, 108B and 108C). Each of these links provides different functions so that the interface 100 may form a connection with the power tool 104.

In this embodiment, the first link 108A is a data link which is arranged to establish a communication link to communicate data between the interface 100 and the sensors 110 of the power tool 104. Preferably, the power tool 104 include one or more sensors 110 to detect the operational status or information of the power tool 104. These may include, without limitations:
- the speed, power or torque of the power tool's actuators (e.g. electric motors, moving mechanisms etc);
- power capacity in reserve;
- operation durations;
- storage capacity;
- power consumption; or
- temperatures of certain components within the power tool 104.

This data link 108A may be arranged to receive detected readings from these sensors. In one example, the power tool 104 may have an analogue to digital converter either integrated with each sensor or arranged to operate with all different sensors 110 so that raw signals detected by each of these sensors may be converted into digital signals which can be processed by a computing device 102. In another example, the interface 100 includes such an analogue to digital converter which is arranged to convert the raw signals from each of the sensors connected through the data link 108A to digital data which can be processed by a computing device 102. Once this digital data originating from the one or more sensors 110 is prepared, it is then transmitted via the interface 100 to the computing device 102.

In the embodiment shown in Figure 1B, the connection 108 between the interface 100 and the power tool may also includes a control link 102B which is arranged to connect the control unit 112 of the power tool 104 with the interface 100, and thus being in communication with the computing device 102 when the computing device 102 is connected to the interface 100. The control unit may be a unit integrated within the power tool 104 which is arranged to centralise the overall control of the power tool 104. In some alternative examples, a digital to analogue converter may be used within the interface 100 or the control unit 112 so that computing signals from the computing device 102 may be used to control the power tool 104. In examples where the power tool is an electric lawn mower, the control unit 112 may control the operation of the electric lawn mower, including:
- On/Off operation;
- Rotational speed of the blades;
- The torque delivered to the blade;
- The power setting of the electric motor; and/or
- The operation of emergency or control shutdown.

The control unit 112 may include one or more analogue to digital converters which interact with the mechanical components of the power tool 104. These converters may be arranged so that digital data provided from the interface 100 which is used to control the operation of the power tool 104 is transmitted to the control unit 112, and thus controlling the operation of the power tool 104.

As shown in Figure 1B, the interface 100 may also include a power link 102C which is arranged to be connected to the power source 114 of the power tool 104. In examples where the power tool 104 includes its own power source 114 or power reservoir such as a battery pack or power pack arranged to store energy for the power tool 104, the power link 102C may provide a transmission medium which allows electrical power to be transmitted from the power source 114 to the interface 100, which in turn energizes any circuits within the interface 100 which requires electrical power to operate. The power link 102C may also provide this electrical power to the interface 100 for transmission through a power link 104B between the interface 100 and the computing device 102 so as to energize the computing device 102 and/or recharged the computing device 102's own battery.

In this embodiment, the connection 106 between the interface 100 and the computing device 102 also includes a data link 106A which is arranged to facilitate the communication of electronic data between the interface 100 and the computing device 102. In some examples, this link 106A may be used for communication of computing data in the form of electronic or optical signals. The computing data may include the computer readable data originating from the sensors 110. The computing data may also include commands or instructions which can be processed by the control unit 112 of the power tool 104 which in turn allow the computing device 102, when manipulated by a user, to control the power tool 104.

Preferably, the connections 106 between the interface 100 and the computing device 102 and the connections 108 between the interface 100 and the power tool 104 are physical connections defined by electrically conductive cable and plug members which can be used to establish a physical connection for the transmission of data and electrical power. However, in alternative embodiments, the data connection and power transmission may be achieved either partially or completely by wireless means such as by Wi-Fi Ethernet, Bluetooth connection or by induction based wireless power transmission systems.

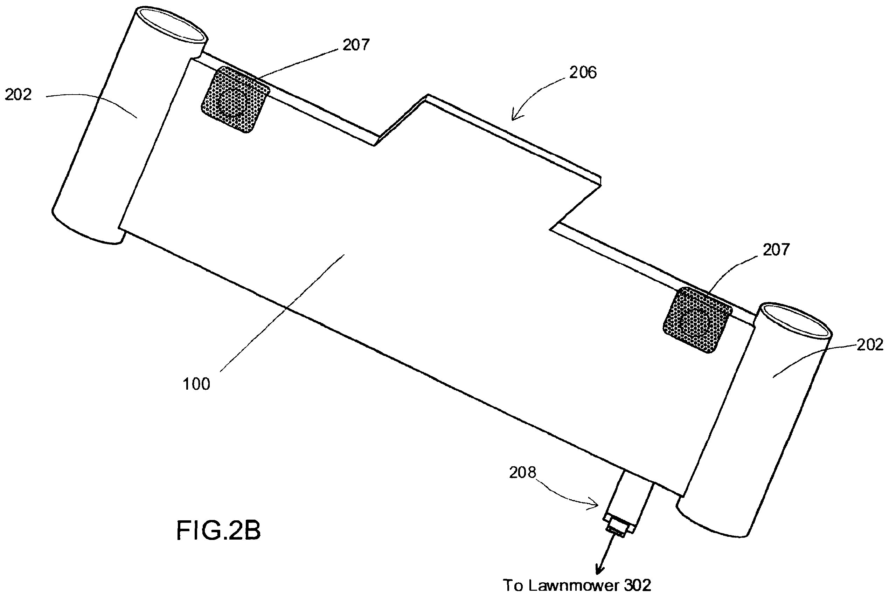

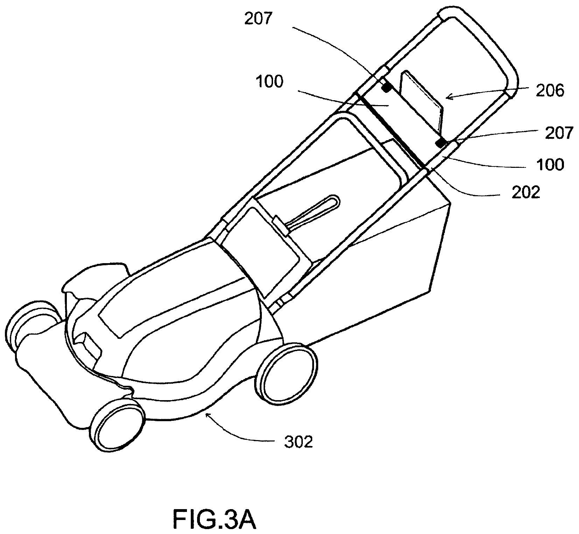

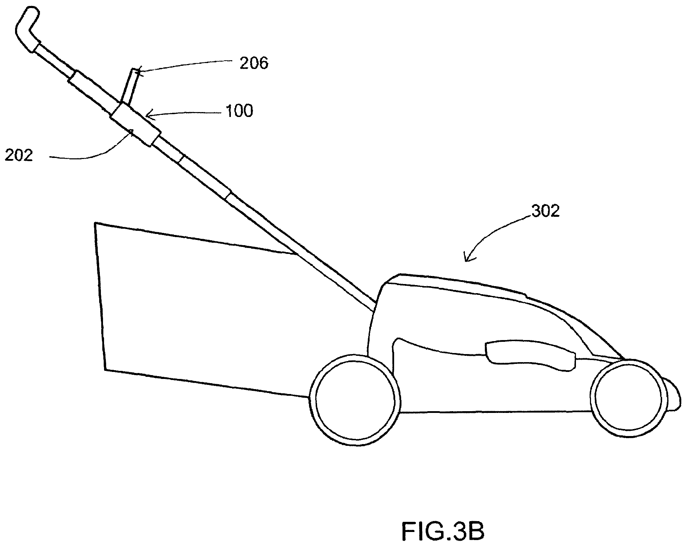

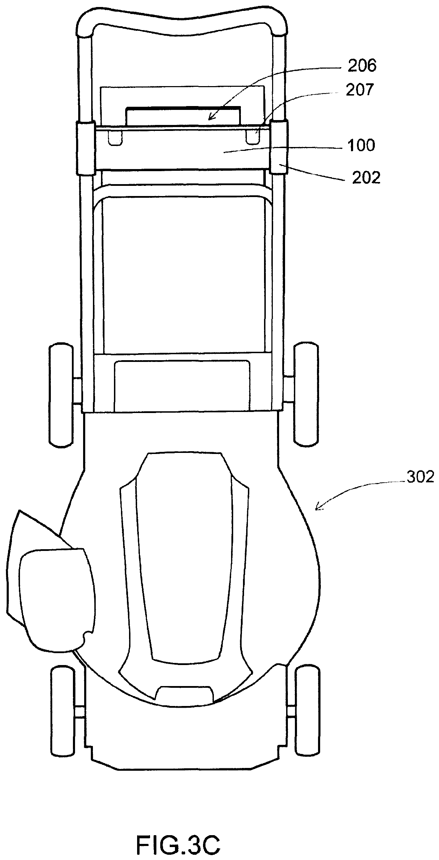

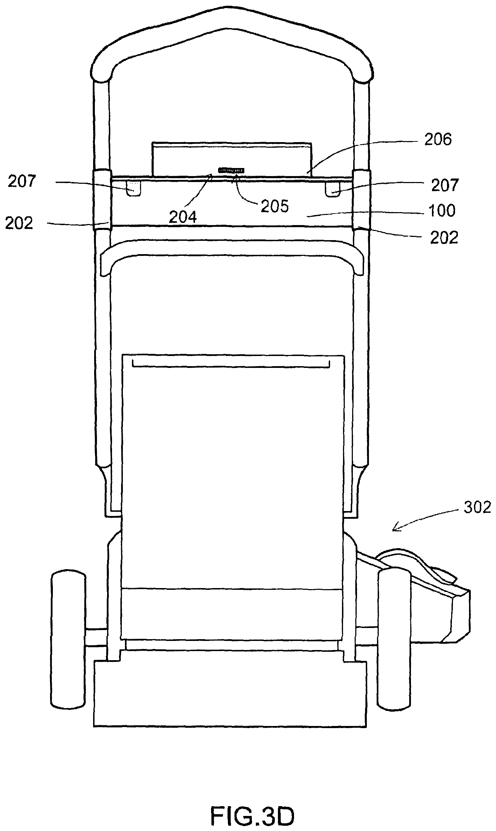

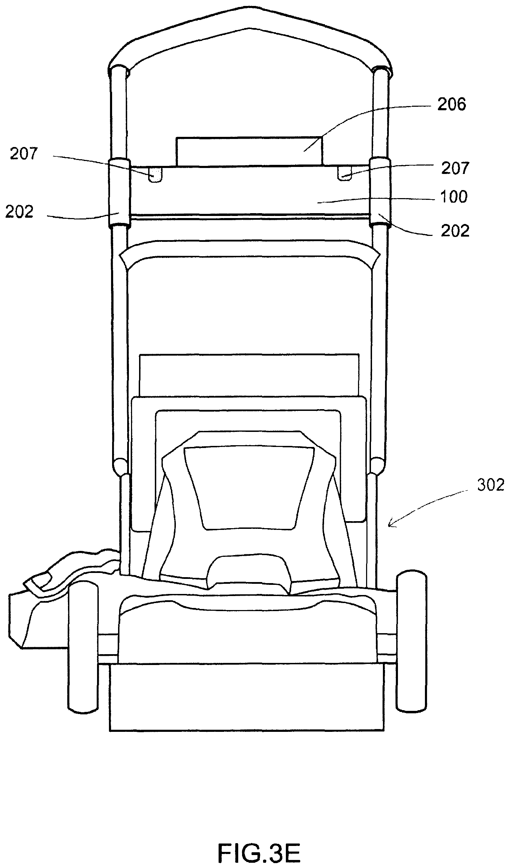

With reference to Figures 2A and 2B and 3A to 3E, there is illustrated an embodiment of the interface 100 arranged for use with a cordless electric lawn mower 302. In this example, the mower 302 is an electric lawn mower which includes a power source arranged to provide electrical energy to power the lawn mower. As shown, the interface 100 is disposed adjacent to the supporting struts of the handle bars of the mower such that the interface 100 and a computing device 102 retained thereon is within perceptive view of a user of the lawn mower 302.

In this embodiment, the interface 100 includes a fastening system 202 which is arranged to removably engage the cylindrical struts supporting the handle bar. In the examples shown in Figures 2A and 2B, the fastening system 202 may include a pair of removable claws which are defined by a material, such as a resilient plastic, so that the claws can be pushed into position with the struts to form a snug fit with the cylindrical struts and thereby engage the interface to the mower 302.

The interface 100 may also include a docking system 202 arranged to retain a computing device 102 whilst also allowing an electrical conductive port to be plugged into the computing device 102. Preferably, the docking system includes an array of protrusions 205 which can then be inserted into a slot of the computing device and in turn connect to the data bus of the computing device 102. Once the protrusions 205 are connected to the computing device 102, the contact of the protrusions 205 with the computing device 102 forms a data connection between the interface 100 and the computing device 102. In examples where the computing device is a tablet computer or tablet styled smart phone (e.g. iphone™, ipod™ or ipad™ made by Apple Computers Inc), the array of protrusions 205 is of a shape which fits these computing devices. In other examples, and as the person skilled in the art will appreciate, these array of protrusions can also be modified to fit into USB data bus interfaces or other propertiary or open source data bus interfaces.

In this embodiment, the interface 100 also includes an audio output system comprising a pair of audio speakers 207. These audio speakers 207 are in turn connected to the docking system 204 so that audio signals from the computing device 102 can be broadcast by the speakers 207 during use.

The docking system 202 may also include a retaining bucket 204 which is formed by a slight depression fitting the profile of a portable computing device arranged to be retained within the bucket 204. The docking system 202 may also include a back rest 206 adjacent to the array of protrusions 205. The back rest 206 is arranged to receive and support a computing device 102. In examples where the computing device is a tablet PC or a smart phone, the retaining bucket 204 and the backrest 206 may be dimensioned so that together the tablet PC or smart phone is retained on the interface 100. The back rest 206 may also be adjustable in that the dimension of its supporting surface may be adjustable depending on the dimension of the portable device it is to support. The back rest 206 may also have an adjustable decline by having a rotatable engagement with the interface 100 so that the back rest 206 may be adjusted about the base of the back rest so that the decline can be adjusted to the user's requirement. This is particularly advantageous in that different heighted users can adjust the decline of the computing device supported by the back rest 206 for an optimal viewing position.

In alternative embodiments, the docking system 202 may include a cover which is arranged to cover and retain the portable computing device 102. This cover may be made from a soft material or hard material, such as soft or hard plastics, which is arranged to cover and protect the portable computing device 102 from debris, liquids or external forces that can damage the device 102. Preferably, the cover is able to protect the device 102 whilst allowing a user to continue to manipulate the device 102. In instances where the device 102 is a tablet computer or a device with a touch screen, the cover is preferably made and disposed on the device 102 so that the ability of the touch screen to detect a user's manipulated is not substantially hindered.

As shown in this example embodiment, the interface 100 includes a plurality of connections in the form of an electrical conduit 208 which runs from the interface 100 to the power tool 104. The electrical conduit may include one or more electric cables arranged to be in electrical communication with certain components, such as the sensors 110, control unit 112 or power source 114, of the mower 302. In alternative embodiments, this electrical conduit may be integrated within the struts of the handle bars or replaced with a wireless communication and power transmission system.

In use, a user of the power tool 104 may proceed to connect a portable computing device 102 to the interface 100 so that the computing device 102 may then begin communicating with the power tool 104. As shown in Figure 2A, a tablet computer 102, such as an iPad™ or Samsung Galaxy™ Tablet can be inserted into the docking system 202 of the interface 100 so that it can be in communication with the lawn mower 302. In this example, the tablet computer 102 will be able to receive the data from the sensors of the lawn mower 302, whilst being able to communicate with the control circuits 112 of the lawn mower 302. In certain examples, the control of the lawn mower through the tablet computer 102 may be disabled, instead allowing the tablet computer 102 to receive data from the sensors 110 of the lawn mower 302 only. This is advantageous in certain example embodiments as the safety of the user is not put at risk by malfunctioning of the computing device 102, although redundant safety mechanisms such as safety switches or dead man switches may reduce this risk.

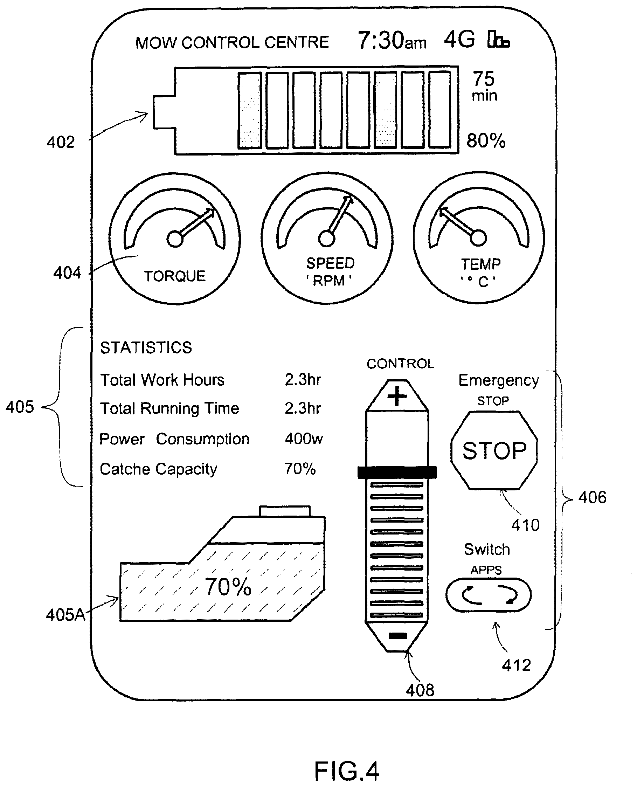

Once the tablet computer 102 is connected to the lawn mower 302, the tablet computer 102 can execute one or more software applications implemented to display the data transmitted from the sensors, or communicate with the control unit of the lawn mower 302. As shown in Figure 4, there is illustrated an example screenshot of a software application operating on a tablet computer which is connected to the interface 100 of a lawn mower 302. In this embodiment, the software application, or app, includes a graphical presentation of the amount of power remaining within the battery 402 of the lawn mower 302 as well as torque, speed and temperature 404 of the lawn mower 302. These figures are derived via the sensors 110 of the lawn mower 302 which in turn supply digital data to the interface 100 for transmission to the tablet computer 104.

Other sensor data may also be transmitted to the tablet computer, which also displays information for the user in the form of graphics 405. These examples include statistical information describing the operation of the lawn mower as well as the capacity 405A remaining on the grass catcher which warns the user that the debris catcher is due to be emptied. In some examples, the app is implemented to store these data into a database and process these data to produce additional useful information for the user.

As shown in this embodiment, the app also includes a control portion 406 which includes an adjustable bar 408 that can be adjusted when user manipulation of the buttons are detected via the tablet computer's touch screen. As illustrated, the speed of the lawn mower's blade can be adjusted along with an emergency stop button 410, which can be actuated by a user to stop the operation of the mower 302.

As the tablet computer is able to perform multitasking, a user may simply operate another software application (app) on the tablet computer 412 to perform other functions, including the display of multimedia or the like on the screen of the tablet computer. This is advantageous in that the user can be provided with additional entertainment whilst operating the lawn mower, whilst ensuring that the operation of the mower is not away from the perceptive view of the user.

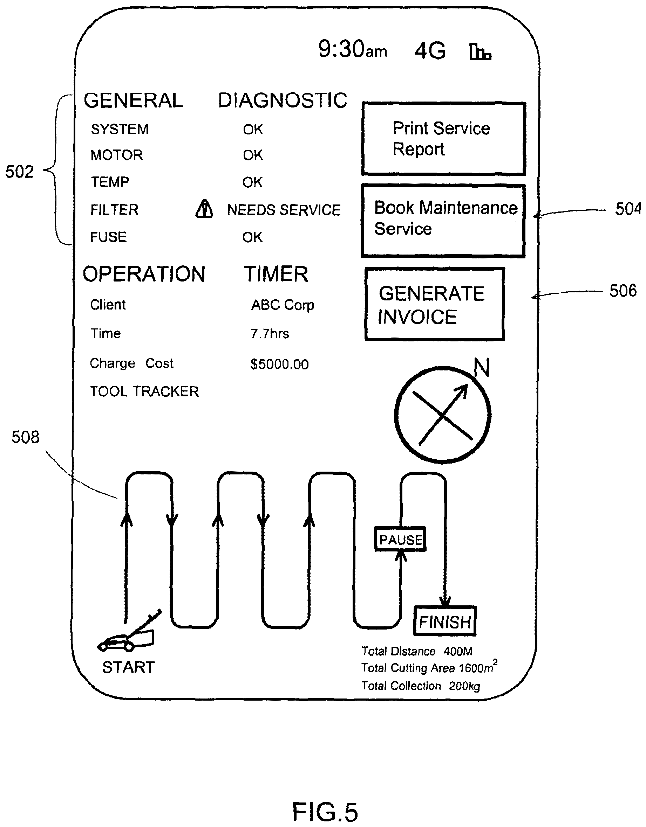

In alternative examples, as illustrated in Figure 5, an app may also be programmed with a database so that statistics relating to the operation of the device can be collected. These can be used to diagnose errors 502 on the power tool or collated information concerning the power tool to automatically issue service reports, maintenance procedures 504 or even invoices to clients based on the charging rate of the operator 506. In another example, the software app may take advantage of the gyroscope of the tablet computer or the GPS receiver of the tablet computer to map the operation of the power tool relative to a specific location 508 so that this information may be stored for further processing or used to display on a map so that a user can keep track of the usage of the power tool relative to a specific geographic location.

Although not required, the embodiments described with reference to the Figures can be implemented to file an application programming interface (API) or as a series of libraries for use by a developer or can be included within another software application, such as a terminal or personal computer operating system or a portable computing device operating system. Generally, as program modules include routines, programs, objects, components and data files the skilled person assisting in the performance of particular functions, will understand that the functionality of the software application may be distributed across a number of routines, objects or components to achieve the same functionality.

It will also be appreciated that the methods and systems of the present invention are implemented by computing system or partly implemented by computing systems than any appropriate computing system architecture may be utilised. This will include stand alone computers, network computers and dedicated computing devices. Where the terms "computing system" and "computing device" are used, these terms are intended to cover any appropriate arrangement of computer hardware for implementing the function described.

Any reference to prior art contained herein is not to be taken as an admission that the information is common general knowledge, unless otherwise indicated.

## Claims

1. A power tool (104) comprising:
an interface (100) having:
a support arrangement
arranged to support a portable electronic device (102) having a display for the display to be viewed by a user during operation of the power tool (104);
a data communication module arranged to form a data connection for communicating data between the power tool (104) and the portable electronic device (102) for displaying, at the display of the portable electronic device (102), the data transmitted from the power tool (104) during operation of the power tool (104) when the portable electronic device (102) is supported by the support arrangement (202) and operably connected to the data communication module; and
a power transmitter arranged to transmit electrical power from a power source (114) of the power tool (104) to the portable electronic device (102) for energizing a power supply of the portable electronic device (102) during operation of the power tool (104) when the portable electronic device (102) is supported by the support arrangement (202) and operably connected to the power transmitter;
**characterised in that** the support arrangement (202) has a back rest (206) with a base and an adjustable decline relative to the base, the back rest (206) being arranged to support the portable electronic device (102), and
the portable electronic device (102) comprises a tablet computer or a smart phone.

2. The power tool (104) in accordance with claim 1, wherein the energization of the power supply of the portable electronic device (102) includes charging of the power supply of the portable electronic device (102).

3. The power tool (104) in accordance with claim 1 or 2, wherein the data communication module comprises a data port that includes one or more physical electrically conductive conduits (208).

4. The power tool (104) in accordance with claim 1 or 2, wherein the data communication module comprises a data port that includes one or more wireless transmitters.

5. The power tool (104) in accordance with any one of the preceding claims, wherein the data communicated between the power tool (104) and the portable electronic device (102) includes any of:
an operation status of the power tool (104); and
information associated with a power source (114) of the power tool (104);
wherein the information associated with the power source (114) includes information describing a power capacity of the power source (114).

6. The power tool (104) in accordance with claim 5, further comprising one or more sensors (110) for detecting operational status or information of the power tool (104), and wherein the data is generated from the one or more sensors (110).

7. The power tool (104) in accordance with any one of the preceding claims, wherein the portable electronic device (102) is arranged to process data communicated between the power tool (104) and the portable electronic device (102), and optionally, to present data communicated between the power tool (104) and the portable electronic device (102) in graphical format.

8. The power tool (104) in accordance with any one of the preceding claims, wherein the portable electronic device (102) is arranged to control the power tool (104) by transmitting commands through the data connection to the power tool (104).

9. The power tool (104) in accordance with any one of the preceding claims, wherein the back rest (206) includes an adjustable support area.

10. The power tool (104) in accordance with any one of the preceding claims, wherein the support arrangement (202) further includes a retaining bucket (204) formed by a slight depression fitting a profile of the portable electronic device (102) for retaining the portable electronic device (102).

11. The power tool (104) in accordance with any one of the preceding claims, wherein the support arrangement (202) further includes a cover arranged to cover and protect the portable electronic device (102).

12. The power tool (104) in accordance with any one of the preceding claims, wherein the interface (100) is arranged on an accessory removably connected to the power tool (104).

13. The power tool (104) in accordance with any one of the preceding claims, further comprising an audio output system for broadcasting audio signals from the portable electronic device (102).

14. The power tool (104) in accordance with any one of the preceding claims, wherein the power tool (104) is an electric lawn mower (302).

## Patentansprüche

1. Ein Elektrowerkzeug (104), umfassend:
eine Schnittstelle (100) mit:
einer Halterung, die so angeordnet ist, dass sie ein tragbares elektronisches Gerät (102) mit einem Display für eine Anzeige, die von einem Nutzer während des Betriebs des Elektrowerkzeugs (104) zu sehen ist, hält;
ein Datenkommunikationsmodul, das so angeordnet ist, dass es eine Datenverbindung zum Übertragen von Daten zwischen dem Elektrowerkzeug (104) und dem tragbaren elektronischen Gerät (102) ausbildet, um während des Betriebs des Elektrowerkzeugs (104) auf dem Display des tragbaren elektronischen Geräts (102) die von dem Elektrowerkzeug (104) übertragenen Daten anzuzeigen, wenn das tragbare elektronische Gerät (102) von der Halterung (202) gehalten wird und mit dem Datenkommunikationsmodul betriebsfähig verbunden ist; und
einen Energietransmitter, der angeordnet ist, um elektrische Energie von einer Stromquelle (114) des Elektrowerkzeugs (104) zu dem tragbaren elektronischen Gerät (102) zu übertragen, um eine Energieversorgung des tragbaren elektronischen Geräts (102) während des Betriebs des Elektrowerkzeugs (104) mit Strom zu versorgen, wenn das tragbare elektronische Gerät (102) von der Halterung (202) gehalten wird und betriebsmäßig mit dem Energietransmitter verbunden ist;
**dadurch gekennzeichnet, dass** die Halterung (202) eine Rückenstütze (206) mit einer Basis und einer einstellbaren Neigung relativ zur Basis aufweist, wobei die Rückenstütze (206) so angeordnet ist, um ein tragbares elektronisches Gerät (102) zu halten, und wobei das tragbare elektronische Gerät (102) einen Tablet-Computer oder ein Smartphone umfasst.

2. Ein Elektrowerkzeug (104) nach Anspruch 1, wobei das Versorgen der Energieversorgung des tragbaren elektronischen Geräts (102) das Laden der Batterieversorgung des tragbaren elektronischen Geräts (102) umfasst.

3. Ein Elektrowerkzeug (104) nach Anspruch 1 oder2, wobei das Datenkommunikationsmodul einen Datenport umfasst, der eine oder mehrere physikalisch elektrisch leitende Leitungen (208) umfasst.

4. Ein Elektrowerkzeug (104) nach Anspruch 1 oder2, wobei das Datenkommunikationsmodul einen Datenport umfasst, der einen oder mehrere drahtlose Transmitter umfasst.

5. Ein Elektrowerkzeug (104) nach einem der vorhergehenden Ansprüche, wobei die zwischen dem Elektrowerkzeug (104) und dem tragbaren elektronischen Gerät (102) übermittelten Daten Folgendes umfassen:
einen Betriebsstatus des Elektrowerkzeugs (104); und
Informationen, die der Stromquelle (114) des Elektrowerkzeugs (104) zugeordnet sind;
wobei die der Stromquelle (114) zugeordneten Informationen eine Information umfasst, die eine Leistungskapazität der Stromquelle (114) beschreibt.

6. Ein Elektrowerkzeug (104) nach Anspruch 5, das ferner einen oder mehrere Sensoren (110) zum Erfassen des Betriebsstatus oder von Informationen des Elektrowerkzeugs (104) umfasst, und wobei die Daten von dem einen oder den mehreren Sensoren (110) erzeugt werden.

7. Ein Elektrowerkzeug (104) nach einem der vorhergehenden Ansprüche, wobei das tragbare elektronische Gerät (102) so eingerichtet ist, um die zwischen dem Elektrowerkzeug (104) und dem tragbaren elektronischen Gerät (102) übertragenen Daten zu verarbeiten und optional die zwischen dem Elektrowerkzeug (104) und dem tragbaren elektronischen Gerät (102) übertragenen Daten in einem grafischen Format darzustellen.

8. Ein Elektrowerkzeug (104) nach einem der vorhergehenden Ansprüche, wobei das tragbare elektronische Gerät (102) so eingerichtet ist, um das Elektrowerkzeug (104) zu steuern, indem Befehle über die Datenverbindung an das Elektrowerkzeug (104) übertragen werden.

9. Ein Elektrowerkzeug (104) nach einem der vorangehenden Ansprüche, wobei die Rückenstütze (206) einen verstellbaren Haltebereich umfasst.

10. Ein Elektrowerkzeug (104) nach einem der vorhergehenden Ansprüche, wobei die Halterung (202) weiter eine durch eine leichte, an ein Profil des tragbaren elektronischen Geräts (102) angepasste, Vertiefung ausgebildete Aufnahmeschale (204) zum Halten des tragbaren elektronischen Geräts (102) umfasst.

11. Ein Elektrowerkzeug (104) nach einem der vorhergehenden Ansprüche, wobei die Halterung (202) weiter eine Abdeckung umfasst, die so angeordnet ist, um das tragbare elektronische Gerät (102) abzudecken und zu schützen.

12. Ein Elektrowerkzeug (104) nach einem der vorangehenden Ansprüche, wobei die Schnittstelle (100) an einem abnehmbar mit dem Elektrowerkzeug (104) verbundenen Zubehörteil angeordnet ist.

13. Ein Elektrowerkzeug (104) nach einem der vorhergehenden Ansprüche, weiter umfassend ein Audio-Ausgangssystem zur Übertragung von Audiosignalen von dem tragbaren elektronischen Gerät (102).

14. Ein Elektrowerkzeug (104) nach einem der vorangehenden Ansprüche, wobei das Elektrowerkzeug (104) ein elektrischer Rasenmäher (302) ist.

## Revendications

1. Outil électrique (104) comprenant :
une interface (100) ayant :
un agencement de support agencé pour supporter un dispositif électronique portable (102) ayant un affichage pour que l'affichage soit visualisé par un utilisateur pendant le fonctionnement de l'outil électrique (104) ;
un module de communication de données agencé pour former une connexion de données pour communiquer des données entre l'outil électrique (104) et le dispositif électronique portable (102) pour afficher, au niveau de l'affichage du dispositif électronique portable (102), les données transmises par l'outil électrique (104) pendant le fonctionnement de l'outil électrique (104) lorsque le dispositif électronique portable (102) est supporté par l'agencement de support (202) et connecté de manière fonctionnelle au module de communication de données ; et
un émetteur d'énergie agencé pour transmettre de l'énergie électrique depuis une source d'alimentation en énergie (114) de l'outil électrique (104) au dispositif électronique portable (102) afin mettre sous tension une alimentation en énergie électrique du dispositif électronique portable (102) pendant le fonctionnement de l'outil électrique (104) lorsque le dispositif électronique portable (102) est supporté par l'agencement de support (202) et connecté de manière fonctionnelle à l'émetteur d'énergie ;
**caractérisé en ce que** l'agencement de support (202) a un dossier (206) ayant une base et une inclinaison ajustable par rapport à la base, le dossier (206) étant agencé pour supporter le dispositif électronique portable (102), et
le dispositif électronique portable (102) comprend une tablette ou un smartphone.

2. Outil électrique (104) selon la revendication 1, dans lequel la mise sous tension de l'alimentation en énergie du dispositif électronique portable (102) comprend la charge de l'alimentation en énergie du dispositif électronique portable (102).

3. Outil électrique (104) selon la revendication 1 ou 2, dans lequel le module de communication de données comprend un port de données qui comprend un ou plusieurs conduits physiques électriquement conducteurs (208).

4. Outil électrique (104) selon la revendication 1 ou 2, dans lequel le module de communication de données comprend un port de données qui comprend un ou plusieurs émetteurs sans fil.

5. Outil électrique (104) selon l'une quelconque des revendications précédentes, dans lequel les données communiquées entre l'outil électrique (104) et le dispositif électronique portable (102) comprend l'un quelconque parmi :
un état de fonctionnement de l'outil électrique (104) ; et
des informations associées à une source d'alimentation en énergie (114) de l'outil électrique (104) ;
dans lequel les informations associées à la source d'alimentation en énergie (114) comprennent des informations décrivant une capacité d'énergie de la source d'alimentation en énergie (114).

6. Outil électrique (104) selon la revendication 5, comprenant en outre un ou plusieurs capteurs (110) pour détecter un état de fonctionnement ou des informations de l'outil électrique (104), et dans lequel les données sont générées par les un ou plusieurs capteurs (110).

7. Outil électrique (104) selon l'une quelconque des revendications précédentes, dans lequel le dispositif électronique portable (102) est conçu pour traiter des données communiquées entre l'outil électrique (104) et le dispositif électronique portable (102), et facultativement, pour présenter des données communiquées entre l'outil électrique (104) et le dispositif électronique portable (102) en format graphique.

8. Outil électrique (104) selon l'une quelconque des revendications précédentes, dans lequel le dispositif électronique portable (102) est conçu pour commander l'outil électrique (104) en transmettant des instructions via la connexion de données à l'outil électrique (104).

9. Outil électrique (104) selon l'une quelconque des revendications précédentes, dans lequel le dossier (206) comprend une zone de support ajustable.

10. Outil électrique (104) selon l'une quelconque des revendications précédentes, dans lequel l'agencement de support (202) comprend en outre un godet de retenue (204) formé par une légère dépression s'ajustant à un profil du dispositif électronique portable (102) pour retenir le dispositif électronique portable (102).

11. Outil électrique (104) selon l'une quelconque des revendications précédentes, dans lequel l'agencement de support (202) comprend en outre un couvercle agencé pour recouvrir et protéger le dispositif électronique portable (102).

12. Outil électrique (104) selon l'une quelconque des revendications précédentes, dans lequel l'interface (100) est agencée sur un accessoire connecté de manière amovible à l'outil électrique (104).

13. Outil électrique (104) selon l'une quelconque des revendications précédentes, comprenant en outre un système de sortie audio pour diffuser des signaux audio à partir du dispositif électronique portable (102).

14. Outil électrique (104) selon l'une quelconque des revendications précédentes, dans lequel l'outil électrique (104) est une tondeuse à gazon électrique (302).
